# EUROPEAN PATENT APPLICATION

(11) **EP 1 528 827 A2**
(43) Date of publication of application: **04.05.2005**
(21) Application number: 04105459.4
(22) Date of filing: 02.11.2004
(51) Int. Cl.: H04Q 7/32

(54) **Over-the-air activation of a SIM card applet at a mobile phone**

(30) Priority: 03.11.2003 US 555752 P
(71) Applicant: Star Home GmbH, 8034 Zürich (CH)
(72) Inventor: OPHIR, Shai, 40 696, Moshav Ein-Vered (IL)
(74) Representative: Lampe, Sigmar

(57) **Abstract**

A method or apparatus for telephony services available to applications running on a virtual operating system on a mobile telephony device so that the applications can make use of the telephone functionality. The method establishes an HTTP or like packet switched communication link to a server and the server establishes an over the air (OTA) link to the SIM card, which is able to process the telephony service, such as placing a call or sending a short message.. The command may be for example a call setup command or a send short message command, and the corresponding functionality is thus made available to the calling application even though the virtual operating system, is unable to invoke telephone functionality directly.

## Description

### FIELD AND BACKGROUND OF THE INVENTION

The present invention relates to telephone functionality (for generic applications running on a mobile handset and, more particularly, but not exclusively to a call placing and messaging capability that can be used by generic applications that can be run on a mobile telephone.

Generally today the system provided on a mobile telephone includes hardware components such as a SIM card (for GSM) and a central processor, and software such as a basic, or first level, operating system and a virtual operating system. The basic operating system interacts with the hardware on the telephone and the virtual operating system interacts with the basic operating system and runs the applications. The advantage of using a virtual operating system is that applications, hereinbelow referred to as generic applications, can be written directly for the virtual operating system and do not have to consider the hardware. Thus such a generic application can be written that is suitable for a wide range of mobile telephones, even though each has different hardware and a different basic operating system. Typically today these generic applications are Java applications, or Java applets, however generic applications may be written for any virtual operating system that may be available at the time.

However, the virtual operating system cannot generally access the mobile telephone's system hardware and therefore cannot carry out typical telephone activities such as placing a telephone call or sending a short messaging service (SMS) message. More specifically, in the case of a virtual operating system for mobile handsets, there is very limited access to telephony capabilities. On the other had there is fairly free access to other device hardware such as the physical display of the handset for example.

An example of a very widespread virtual operating system is the Java virtual machine (JVM) provided by Sun Microsystems. Applications can be written for JVM and can be run on machines with JVM whatever their native operating system. Thus they will work just as well with UNIX, Windows, Linux or Mac. J2ME is the downsized version of JVM specifically for mobile telephones, and is currently provided in tens of millions of mobile telephones. The general version of J2ME that is provided can be installed on any mobile telephone and cannot operate the telephony functions of the hardware. It is possible, at considerable cost, to customize J2ME for a specific model of mobile telephone and then it is able to operate the hardware, however this is rarely done, presumably because it is not considered cost-effective.

An example of an application where an ability to place calls directly through an application would be useful is an application that is usefully provided as part of a visitor portal of a roaming telephony service and provides a user with a map or directory of a location he is visiting. The user can view relevant parts of the listing through a GPRS connection whilst on line, or he can download the listing to his mobile telephone and read the relevant parts offline at his leisure. Thus a user arriving in London as a visitor can use the application to obtain a list of restaurants in his vicinity. The list of restaurants may include telephone numbers for each to enable him to make a reservation, however there is no possibility of being able to select the telephone number and automatically place a call. Rather the user has to write down or memorize the number, close the application and then call. Should he wish to return to the application afterwards then he has to re-open the application from scratch.

Certain more advanced mobile telephones may permit the user to place the application in the background and then make a call but this does not save him from having to memorize or write down the number.

There is thus a widely recognized need for, and it would be highly advantageous to have, a call placing system devoid of the above limitations.

### SUMMARY OF THE INVENTION

According to one aspect of the present invention there is provided a method for making subscriber identification module (SIM) toolkit proactive commands available to applications running on a virtual operating system on a mobile telephony device, the method comprising:
via said application or said virtual operating system establishing a packet switched communication link to a server,
from said server activating a SIM card applet at a mobile telephony SIM card to operate said mobile telephony device to carry out said proactive command.

In an embodiment, the SIM card is a third generation (3G) SIM card.

The method may comprise checking that said client is present prior to said operating and if said client is not present then using an over the air connection to send said client to said mobile telephony device.

Typically, the over the air connection is provided through an over the air gateway.

Preferably, said packet switched connection comprises a hyper-text transfer protocol (HTTP) connection.

Preferably, said proactive command is a call setup command and a destination number for said call setup command is passed from said mobile telephony device to said server via said HTTP connection.

Preferably, said proactive command is a command to send a short message and a destination number for said short message is passed from said mobile telephony device to said server via said HTTP connection.

Preferably, said operating said client comprises sending a trigger for said applet via an over the air connection.

Preferably, said operating said client comprises sending a trigger for said applet via an over the air connection.

According to a second aspect of the present invention there is provided a method of automatic placing of a call or sending of a message from a mobile telephony device having a subscriber identification module (SIM) card comprising:
opening a packet protocol connection to a server,
making an over the air connection from the server back to the mobile telephony device, and
using the over the air connection to operate a an applet at the SIM card to carry out said call placing or sending of said message.

In an embodiment, said SIM card is a third generation (3G) SIM Card.

The method may comprise checking that said client is present prior to said operating and if said client is not present then using said over the air connection to send said client to said mobile telephony device.

Preferably, said opening is carried out by an application being run on said mobile telephony device through a virtual operating system.

Typically, the over the air connection is provided through an over the air gateway.

Preferably, said packet switched connection comprises a hyper-text transfer protocol (HTTP) connection.

Preferably, a destination number for said call placing or said message is passed from said mobile telephony device via said HTTP connection to said server.

In an embodiment, operating said client/applet comprises sending a trigger via said over the air connection to trigger a set up call or send message proactive command via said applet.

Preferably, said operating client comprises sending a trigger via said over the air connection to trigger a set up call or send message command via said applet.

The method may comprise providing any subscriber identification module toolkit proactive command via said applet as functions available to a virtual operating system located on said mobile telephony device.

According to a third aspect of the present invention there is provided a method for placing a telephone call or sending a message from a mobile telephony device having a subscriber identification module (SIM) card from an application running on a virtual operating system, the method comprising:
via said application or said virtual operating system establishing a packet switched communication link to a server,
from said server obtaining a trigger to operate a client at said SIM card to operate said mobile telephony device to place a call or send said message.

In an embodiment, said mobile telephony device comprises a third generation (3G) subscriber identification module (SIM) and said client is located on said module.

The method may comprise checking that said client is present prior to said obtaining an operating command and if said client is not present then sending said client to said mobile telephony device.

The method may comprise triggering said command through an over the air connection via an over the air gateway.

Preferably, said sending said client comprises using an over the air connection via an over the air gateway.

Preferably, said packet switched connection comprises a hyper-text transfer protocol (HTTP) connection.

Preferably, a dialing number for placing said telephone call or sending said message is passed to said mobile telephony device via said over the air connection.

Preferably, said operating said client comprises triggering said client via said over the air connection to carry out said commands

Preferably, a dialing number for placing said telephone call or sending said message is passed to said server from an application on said mobile telephony device via said HTTP connection.

The method preferably comprises providing any subscriber identification module toolkit proactive command as functions available to said virtual operating system.

According to a fourth aspect of the present invention there is provided a server for making subscriber identification module (SIM) toolkit proactive commands available to applications running on a virtual operating system on remotely located mobile telephony devices over a cellular telephony network, the server comprising:
a first connection unit for setting up first protocol connections with requesting remotely located telephony devices for receiving requests and associated parameters from applications running on said devices
   and
a second connection unit, associated with an over the air (OTA) platform for communicating with a SIM applet on a requesting device to trigger a SIM toolkit command at said requesting device, thereby to enable an application at a requesting devices to access telephony functions at said requesting device.

Preferably, said first connection unit comprises a transfer protocol connection unit and said first protocol is a transfer protocol.

Preferably, said first protocol is the hypertext transfer protocol (HTTP).

Preferably, said second connection unit is operative to set up an over the air (OTA) connection.

Preferably, said second connection unit is operative to set up said OTA connection via an OTA gateway.

The server may comprise a database for indicating an applet held status of a given requesting device, said status being indicative of whether the device has a SIM applet for triggering.

The server may comprise a query unit associated with said database, operative to query said database to determine whether said client is present.

The server may comprise a client installation module connected to said query module and operative to send a client for installation at a respective requesting device if it is determined that said client is not present.

The proactive command may for example be a call setup command in which case a corresponding parameter would be a destination number for said call setup command.

Alternatively the proactive command may be a command to send a short message, but again the parameter would be a destination number for said short message.

According to a fifth aspect of the present invention there is provided a user client for location in a mobile telephony device comprising
an input unit for receiving a trigger and an associated parameter via a first connection from a remotely located server, and
a command unit, associated with said trigger unit, for for using said trigger to activate a proactive command, said associated parameter being for combining with said proactive command to operate a telephony function of said mobile telephony device.

Preferably, the connection comprises an over the air (OTA) connection, and said remotely located gateway is an OTA gateway.

Preferably, said mobile telephony device comprises a subscriber identification module (SIM) and said user client is located within said subscriber identification module.

Typically the proactive command is part of the SIM toolkit command set.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
FIG. 1 is a simplified system diagram for a mobile cellular device;
FIG. 2 is a flow chart illustrating the process of obtaining SIM toolkit functionality for a generic application according to a first preferred embodiment of the present invention;
FIG. 3 is a simplified diagram illustrating a server for providing the SIM toolkit functionality to a requesting mobile device according to a preferred embodiment of the present invention; and
FIG. 4 is a simplified diagram illustrating a client for obtaining and using the SIM toolkit functionality at a requesting mobile device according to a preferred embodiment of the present invention.

### DESCRIPTION OF THE PREFERRED EMBODIMENTS

The present embodiments comprise a method or apparatus for making subscriber identification module (SIM) toolkit proactive commands available to applications running on a virtual operating system on a mobile telephony device so that the applications can make use of the telephone functionality. The method establishes an HTTP or like packet switched communication link to a server which can activate a SIM card to perform SIM toolkit commands, and the server establishes an over the air (OTA) link to the SIM card. Then a trigger is sent via the OTA link to operate a client at the SIM card to carry out a SIM toolkit proactive command. That is to say the server triggers a specific applet or client which resides on the SIM card. The client performs the proactive SIM commands (i.e. place a call, or sends an SMS. The server itself merely sends a trigger to the applet and does not itself need to be aware of the specific commands. It is noted that the client referred to herein is an applet running on the SIM card. It is typically but not necessarily a Java applet.

Any parameters for the command are sent with the trigger via the OTA link. The command may be for example a call setup command or a send short message command, the parameters the associated telephone numbers, and the corresponding functionality is thus made available to the calling application even though the virtual operating system, not being hardware specific, is unable to invoke telephone functionality directly. The invention also relates to the server and to the client at the mobile telephony device.

It is pointed out that the mobile telephone in fact includes two virtual environments, in the typical case two separate Java environments. One of those environments is the J2ME virtual operating system, which is the Java environment running on the handset itself, and which lacks the telephony capabilities, and the second is the Java SIM card, where Java applets are able to run. This second Java environment, although virtual too, has APIs for the telephony functionality, in contrast to the first. Ordinarily these two environments work separately since they have different functions, and the present embodiments teach a method in which the two environments can be made to work together.

It is further noted that the invention is not limited to Java-based SIM cards. In addition there are non-Java SIM cards which also run applets, and have access to the telephony functions.

The principles and operation of a proactive command availability system according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

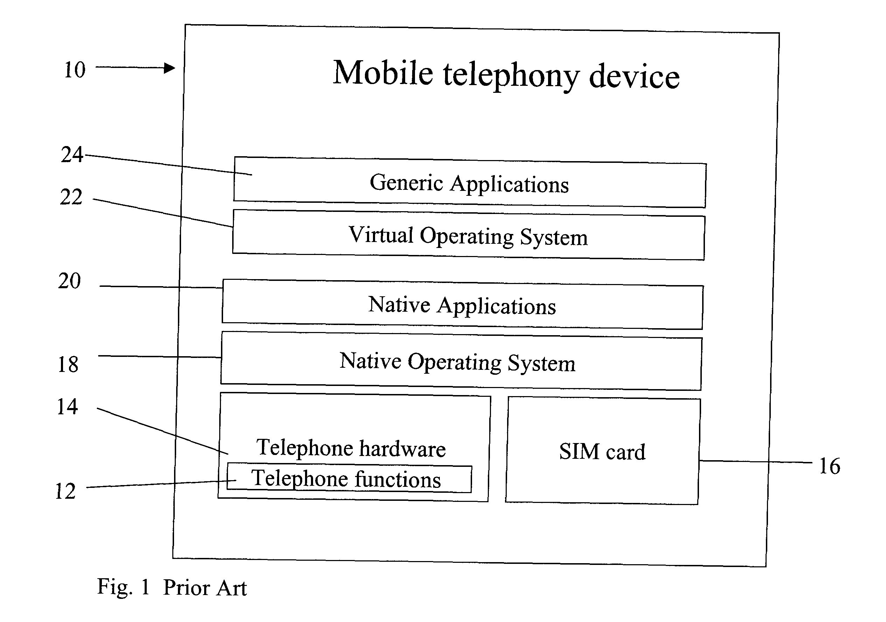

Reference is now made to Fig. 1, which is a simplified layered system diagram illustrating the components of a mobile telephone system 10. The system comprises telephone functions 12 such as call setup and the like. The telephone functions 12 are part of the telephone hardware and native operating system, 14, but can also be accessed by applets of the subscriber identification module (SIM) card 16, Above the hardware is a native operating system 18 which is generally model, or at least vendor, specific and which operates the hardware. The telephone functions are then provided by a combination of hardware and software. The native operating system is able to support native applications 20, that is applications written specifically for that operating system.

Now often, applications providers wish to provide generic applications, that is applications that run on numerous mobile telephone models. Thus there is provided the virtual operating system 22, as explained in the background, which is not hardware specific and which can support generic applications 24.

As explained in the background, the virtual operating system cannot operate the telephony hardware of the device since generic API's do not exist for these functions., and therefore the generic applications are unable to access the telephone functionality. On the other hand, the Java virtual operating system knows how to interact with the display, which is hardware, and with the microphone and other hardware components. A reason the virtual operating system does not have access to the telephony functionality is as mentioned, that there are no APIs for telephony in J2ME. Now it is possible to customize the J2ME virtual operating system so that it knows how to operate the hardware of the specific model, but such customization is difficult and is not commonly carried out. Whilst the above has been described in relation to the virtual environment of a virtual operating system, the invention applies equally to native operating systems. Thus there may also be native operating systems, such as Microsoft CE, which do not in all cases provide an interface to the telephony functionality, and the presently described embodiments are applicable to such a case.

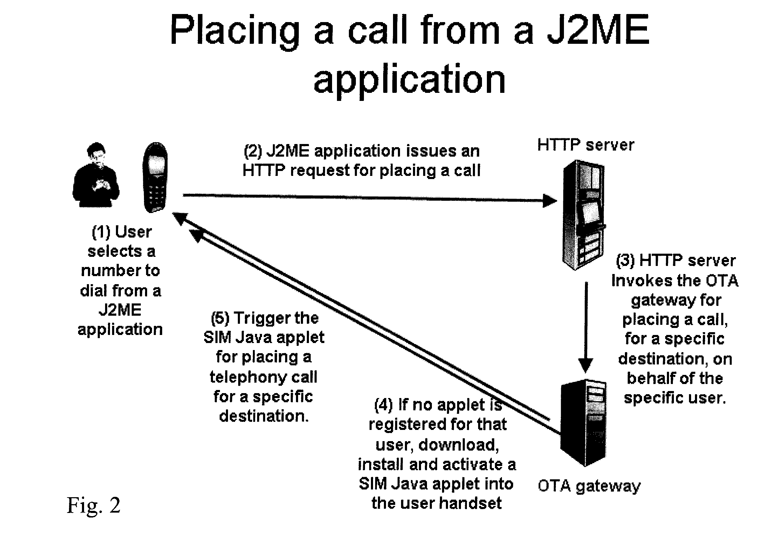

Reference is now made to Fig. 2, which is a simplified flow chart illustrating a method for making subscriber identification module (SIM) toolkit proactive commands available to applications running on a virtual operating system on a mobile telephony device. An application running in a virtual operating system, such as J2ME, the cellular version of the Java Virtual Machine (JVM) is able to set up an HTTP or like IP connection to a server.

The server is able to trigger a client at the SIM card, and the client knows how to perform the proactive commands. SIM toolkit commands are commands defined by mobile telephony standards such as the GSM standards, and specifically the 3GPP 11.14. standard, the contents of which are hereby incorporated by reference, which defines the commands to be made available as a SIM toolkit to the SIM cards. These commands include *inter alia* a call setup command that can be used to place a telephone call. The call setup command needs a telephone number as a parameter. Another command is the send short message command which causes the phone to send a text message. The send short message command needs a destination telephone number as a parameter and also the text of the message to be sent. Triggers are sent to the SIM card via an over the air (OTA) connection that is made directly to the SIM card via an OTA gateway. The triggers are accompanied by any necessary parameters.

The SIM card has a client program, in an embodiment, the above-referred to Java applet, which is able to match up the command and its associated parameters and operate the telephone hardware to carry out the command, in effect bypassing both the virtual and native operating systems.

Now in the case of J2ME, which is the Java based virtual machine, it is possible to check that the client is in fact present in the SIM card. If it is not then the OTA connection can be used to send the client, in practice a fairly small Java (or for that matter a non-Java) applet, of size in the order of magnitude of 1k, to the SIM card and have it installed.

The proactive command can be any SIM toolkit command, and the present system provides the functionalities of these commands to the virtual operating system and the generic applications, thus rendering unnecessary the stage of customizing the virtual operating system for the device.

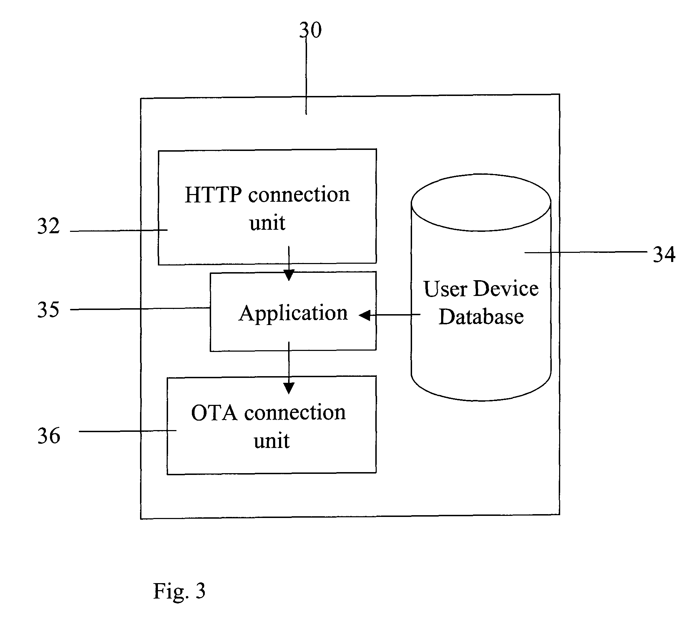

Reference is now made to Fig. 3, which is a simplified diagram illustrating a server 30 for making the subscriber identification module (SIM) toolkit proactive commands available to applications running on a virtual operating system as discussed above.

Server 30 comprises a first connection unit 32 for setting up an HTTP or like connection to a requesting mobile telephone, a database 34 indicating handset status, for example does it have the client installed, an application 35 for sending triggers and parameters etc to the handset, and a second connection unit 36, associated with the OTA platform which sends a trigger for activating the applet, and any necessary parameters, to the requesting devices, via an OTA gateway and OTA connection. The second connection unit can also be used to send the Java client applet to the requesting device if not already installed. The application provides the system logic, and determines from the database whether the user needs an applet to be sent, what kind of trigger is needed, what parameters to send etc.

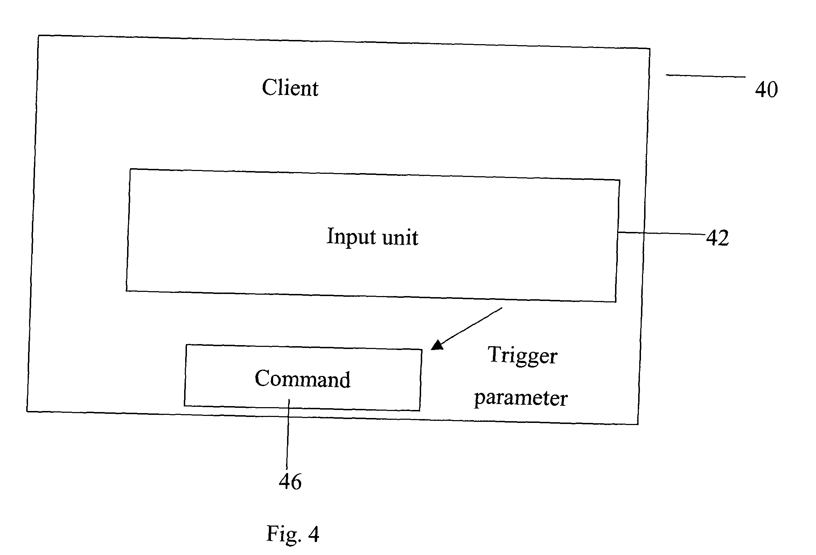

Reference is now made to Fig. 4, which is a simplified diagram illustrating a user client for location in the SIM card of a mobile telephony device, for receiving the commands and parameters and using them to operate the mobile telephone. The client 40 is preferably a small Java applet, typically no larger than 1k, and has a single input unit 42 for receiving an activation trigger and any necessary parameters from the OTA connection from the server and gateway, and a command unit 46 for using the relevant SIM toolkit command to carry out the desired telephony operation.

It is noted that the internal format of the message sent via the OTA connection to the handset is constructed by application 35. The client program or applet running on the SIM card is aware of the construct used, and is thus able to fetch the trigger and parameter data from the OTA message. The trigger thus operates as an ordinary API between a server and a client.

In more specific terms, the solution of the presently preferred embodiments involves the Java SIM Toolkit technology, and an HTTP server and OTA gateway (Over the Air) enabling the communication between the J2ME application and the Java, or other, SIM card environment. The solution is particularly applicable to GSM mobile technology.

The J2ME virtual operating system and its supported generic application, running on the mobile handset, can establish an HTTP connection with an HTTP server, for various purposes. That can be done also for the purpose of placing a call or sending an SMS, where the destination number and other required information is passed along the HTTP transaction.

The server will trigger, via OTA, an applet on the SIM card, which is capable of placing telephony calls and sending SMS notifications. This functionality is supported by any standard Java SIM card, complies with the GSM 3GPP TS 03.19 standard, release 1999: GSM API for SIM Toolkit stage 2, available from ETSI, the contents of which are hereby incorporated by reference. Currently all major suppliers of Java SIM cards support this standard (such as Gemplus, Schlumberger, Oberthur, Orga and D&G). It may also be supported by proprietary non-Java SIM cards.

Placing a call and sending notifications by the SIM card may be implemented via the Set Up Call and Send Short Message proactive commands, or other appropriate proactive commands, as specified by the GSM standard 3GPP 11.14 Release 1999, available from ETSI, also incorporated herein by reference.

If the SIM applet is not installed on the SIM card yet, it can be installed and activated over the air, at the first time of using this service. This is also defined by the GSM 03.19 standard for Java cards -Install and Activate SIM Java applets over the air, incorporated herein by reference. The advantage of the over the air installation is that the user does not need to turn up at a service point.

The present implementation can provide the J2ME applications with other SIM toolkit capabilities, such as sending USSD, handset refresh, timer management and all other SIM proactive commands, as listed in the 3GPP TS 11.14 Release 1999 standard specification, incorporated herein by reference.

The solution may be implemented also for a non-Java SIM toolkit.

It is expected that during the life of this patent many relevant mobile telephony devices and systems will be developed and the scope of the terms herein, particularly of the terms "mobile telephony device", subscriber identification module and "virtual operating system", is intended to include all such new technologies *a priori*.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. A method for making subscriber identification module (SIM) toolkit proactive commands available to applications running on a virtual operating system on a mobile telephony device, the method comprising:
via said application or said virtual operating system establishing a packet switched communication link to a server,
from said server activating a SIM card applet at a mobile telephony SIM card to operate said mobile telephony device to carry out said proactive command.

2. The method of claim 1, wherein said SIM card is a third generation (3G) SIM card.

3. The method of claim 1, further comprising checking that said client is present prior to said operating and if said client is not present then using an over the air connection to send said client to said mobile telephony device.

4. The method of claim 3, wherein the over the air connection is provided through an over the air gateway.

5. The method of claim 1, wherein said packet switched connection comprises a hyper-text transfer protocol (HTTP) connection.

6. The method of claim 5, wherein said proactive command is a call setup command and a destination number for said call setup command is passed from said mobile telephony device to said server via said HTTP connection.

7. The method of claim 5, wherein said proactive command is a command to send a short message and a destination number for said short message is passed from said mobile telephony device to said server via said HTTP connection.

8. The method of claim 1, wherein said operating said client comprises sending a trigger for said applet via an over the air connection.

9. The method of claim 7, wherein said operating said client comprises sending a trigger for said applet via an over the air connection.

10. A server for making subscriber identification module (SIM) toolkit proactive commands available to applications running on a virtual operating system on remotely located mobile telephony devices over a cellular telephony network, the server comprising:
a first connection unit for setting up first protocol connections with requesting remotely located telephony devices for receiving requests and associated parameters from applications running on said devices
and
a second connection unit, associated with an over the air (OTA) platform for communicating with a SIM applet on a requesting device to trigger a SIM toolkit command at said requesting device, thereby to enable an application at a requesting devices to access telephony functions at said requesting device.

11. The server of claim 10, wherein said first connection unit comprises a transfer protocol connection unit and said first protocol is a transfer protocol.

12. The server of claim 11, wherein said first protocol is the hypertext transfer protocol (HTTP).

13. The server of claim 10, wherein said second connection unit is operative to set up an over the air (OTA) connection.

14. The server of claim 13, wherein said second connection unit is operative to set up said OTA connection via an OTA gateway.

15. The server of claim 11, further comprising a database for indicating an applet held status of a given requesting device, said status being indicative of whether the device has a SIM applet for triggering.

16. The server of claim 15, further comprising a query unit associated with said database, operative to query said database to determine whether said client is present.

17. The server of claim 16, further comprising a client installation module connected to said query module and operative to send a client for installation at a respective requesting device if it is determined that said client is not present.

18. The server of claim 11, wherein said proactive command is a call setup command and said parameter is a destination number for said call setup command.

19. The server of claim 11, wherein said proactive command is a command to send a short message and said parameter is a destination number for said short message.

20. A user client for location in a mobile telephony device comprising
an input unit for receiving a trigger and an associated parameter via a first connection from a remotely located server, and
a command unit, associated with said trigger unit, for for using said trigger to activate a proactive command, said associated parameter being for combining with said proactive command to operate a telephony function of said mobile telephony device.

21. The user client of claim 20, wherein said connection comprises an over the air (OTA) connection, and said remotely located gateway is an OTA gateway.

22. The user client of claim 20, wherein said mobile telephony device comprises a subscriber identification module (SIM) and said user client is located within said subscriber identification module.

23. The user client of claim 22, wherein said proactive command is part of the SIM toolkit command set.
